# EUROPEAN PATENT APPLICATION

(11) **EP 2 079 053 A1**
(43) Date of publication of application: **15.07.2009**
(21) Application number: 08171659.9
(22) Date of filing: 15.12.2008
(51) Int. Cl.: G06T 7/00

(54) **Method and apparatus for calibrating a video display overlay**

(30) Priority: 10.01.2008 US 8370
(71) Applicant: Delphi Technologies, Inc., Troy, Michigan 48007 (US)
(72) Inventor: Williams, Steven A., Kokomo, IN 46901 (US); Dhua, Arnab S., Kokomo, IN 46902 (US)
(74) Representative: Denton, Michael John

(57) **Abstract**

A method and apparatus for calibrating a video display overlay (24). The method includes the steps of providing calibration indicia (34, 34'), providing an image capture device (12) and an image processor (14) operatively connected to the image capture device (12), positioning the image capture device (12) with respect to the calibration indicia (34, 34'), capturing an image (40) of the calibration indicia (34, 34') using the image capture device (12), analyzing the image (40) using the image processor (14) to identify the portions of the image (40) that correspond to the calibration indicia (34, 34'), outputting the result as calibration indicia position data (42, 45), and calculating a calibration data set (44, 48, 62, 64) based on the calibration indicia position data (42, 45) using the image processor (14). The apparatus includes calibration indicia (34, 34'), an image capture device (12) directed toward the calibration indicia (34, 34') for providing a reference image (40), and an image processor (14) electrically connected to the image capture device (12).

## Description

### Technical Field

The present invention relates to the field of overlays for video displays.

### Background of the Invention

In-vehicle video displays that provide information regarding the area around a vehicle are becoming common in automobiles. One particular application of this technology is referred to as a rear view camera display, which provides a video display that allows the driver of a vehicle to see areas behind the vehicle that would otherwise be obscured by the structure of the vehicle itself.

In order to provide a video image of the area behind the vehicle, a camera is typically mounted at the rear of the vehicle, for example, on the rear bumper of the vehicle. So that one camera may be used to view a wide area, the cameras used with in-vehicle video displays are often provided with wide-angle lenses. However, when the video image produced by a wide-angle camera is displayed on an in-vehicle video display monitor, it may be difficult for the driver of the vehicle to accurately judge distances and angles. For this reason, it is known to superimpose computer-generated overlays upon the image generated by the wide angle camera, and the resulting composite image is then displayed on the in-vehicle video display monitor. Such overlays typically include path lines, which indicate the path along which the vehicle is traveling, and distance lines, which indicate the distance from the vehicle at which objects at certain points on the video display appear.

The appropriate placement of path lines and distance lines on the video display inside a vehicle is dependent upon a number of factors, including the position at which the camera
is mounted with respect to the vehicle, and the angular orientation of the camera with respect to the vehicle. Accordingly, the appropriate locations of the path lines and the distance lines with respect to the video image produced by the rear view camera differs from one vehicle model to the next.

In order for manually created path and distance line overlays to accurately correspond to the image provided by the camera, the position and orientation of the camera installed on the vehicle in question must be substantially similar to the position and orientation of the camera, whether actual or virtual, that was used to capture the reference image from which the manual overlay was created. However, it is not practical to require excessively precise design tolerances, as doing so would lead to increased manufacturing costs. Thus, the location and angular orientation of the camera may vary significantly from one vehicle to the next of the same model. Additionally, variability between cameras from one vehicle to the next further impacts the accuracy of a manually created overlays, as tolerances within the camera itself can affect the image captured by the rear view camera. Thus, even among vehicles of the same model, variability in the vehicles and the cameras due to acceptable design tolerances will produce inaccuracies in the positioning of the path and distance lines with respect to the video displays in similar vehicles.

### Summary of the Invention

A method and apparatus for calibrating a video display overlay are taught herein. A calibration station has calibration indicia provided therein, a vehicle mountable image capture device is disposed within the calibration station, an image processor is operatively connected to the image capture device, and a monitor may be operatively connected to the image processor. The calibration indicia may include a plurality of path line indicators and a plurality of distance line indicators. The image capture device is directed toward the calibration indicia, and a reference image of the calibration indicia is captured. The reference image is then analyzed using the image processor to identify the portions of the reference image that correspond to the calibration indicia and thereby calculate a calibration data set.

Once the calibration data set has been calculated, the image capture device is operable to output a video signal, and the image processor is operable to generate an overlay image based on the calibration data set, receive the video signal from the image capture device, and superimpose the overlay image on the video signal to provide a composite video signal. The overlay may include a plurality of path lines and a plurality of distance lines.

### Brief Description of the Drawings

The description herein makes reference to the accompanying drawings wherein like referenced numerals refer to like parts throughout several views and wherein:

**FIG. 1** is a block diagram showing an in-vehicle display system;

**FIG. 2** is an illustration showing a vehicle equipped with the in-vehicle display system;

**FIG. 3** is a flowchart showing the creation of a composite video image;

**FIG. 4** is an illustration showing a composite video image presented on a monitor of the in-vehicle display system;

**FIG. 5** is an illustration showing a calibration station;

**FIG. 6** is an illustration showing an alternative calibration station;

**FIG. 7** is an illustration showing a reference image of the calibration station presented on the monitor of the in-vehicle display system;

**FIG. 8** is a flowchart showing calibration and rendering of an overlay according to a calibration method for the in-vehicle display system;

**FIG. 9** is an illustration showing the calibration method for the in-vehicle display system;

**FIG. 10** is a flowchart showing calibration and rendering of the overlay according to an alternative calibration method for the in-vehicle display system; and

**FIG. 11** is an illustration showing the alternative calibration method for the in-vehicle display system.

### Description of the Preferred Embodiments

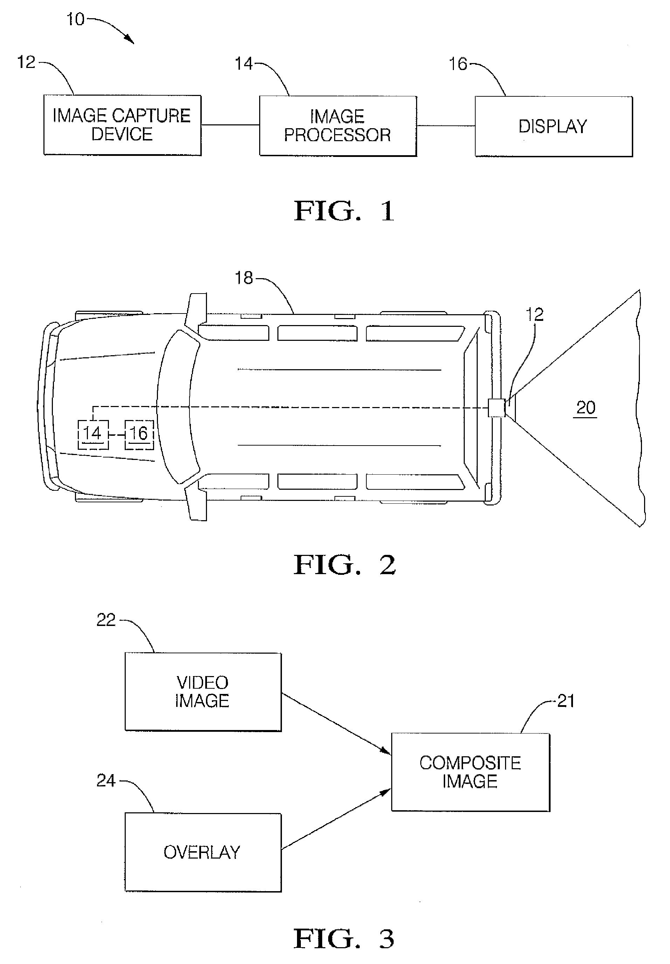

As shown in **FIG. 1****,** an in-vehicle display system 10 includes at least one image capture device 12, such as a video camera or other device operable to output a signal for providing a continuously updated, substantially real-time video signal. The image capture device 12 is connected to an image processor 14, which receives the video signal from the image capture device 12 and performs one or more video processing operations to the video signal produced by the image capture device 12, such as superimposing an image thereon, as will be described in detail herein. The image processor 14 may have a vehicle data bus (e.g. CAN) as input to receive data including, but not limited to, a steering angle value and a velocity value, for use during video processing operations. The image processor 14 outputs a processed video signal to a monitor 16. The monitor 16 may be any manner of video monitor, such as an LCD panel.

As shown in **FIG. 2**, the monitor 16 is mounted within a vehicle 18 so that the monitor 16 may be viewed by the driver of the vehicle 18. The image capture device 12 may be mounted on a rear exterior surface of the vehicle 18 or within the vehicle 18, for example, behind a rear facing window. Accordingly, the image capture device 12 is substantially rear-facing to provide a field of vision 20 that extends rearward of the vehicle 18. The image capture device 12 is in electrical communication with the image processor 14, and the image processor 14 is electrically connected to the monitor 16. Of course, it should be understood that although the description herein describes the image capture device 12 as rear facing, such is not necessary, and the teachings herein are equally applicable to front facing cameras that are mounted on a front exterior surface of a vehicle 18 or within the vehicle 18, for example, behind a front facing window. In this manner, a field of vision 20 that extends forward of the vehicle 18 may be provided to allow for the in-vehicle display system 10.

In order to provide a signal to the monitor 16, a background video image 22 is combined with one or more overlay images, such as a rear view information overlay 24, to provide a composite video image 21, as shown in **FIG. 3****.** The background video image 22 is a substantially real-time video signal produced by the image capture device 12 that depicts the area to the rear of the vehicle 18, such as a roadway surface (not shown). It should be understood, however, that the background video image 22 need not be a completely unaltered representation of the output signal from the image capture device 12, but rather, the background video image 22 may be modified by the image processor 14, for example, by cropping, by color or brightness adjustments, or by applying distortion corrections. The rear view information overlay 24 is provided by the image processor 14 and superimposed upon the background video image 22 to provide the composite video image 21, which is displayed by the monitor 16. The rear view information overlay 24 may also be updated in real-time taking into account data regarding operational characteristics of the vehicle 18, such as a steering angle value provided by a steering angle sensor (not shown). As an alternative, it should be understood that composite video image 21 need not be displayed upon the monitor in certain applications, but rather, the composite video image including the overlay 24 may be used for internal processing by the image processor 14, for applications such as lane departure, in which case the monitor 16 is operable to display a warning or other information to the driver of the vehicle 18.

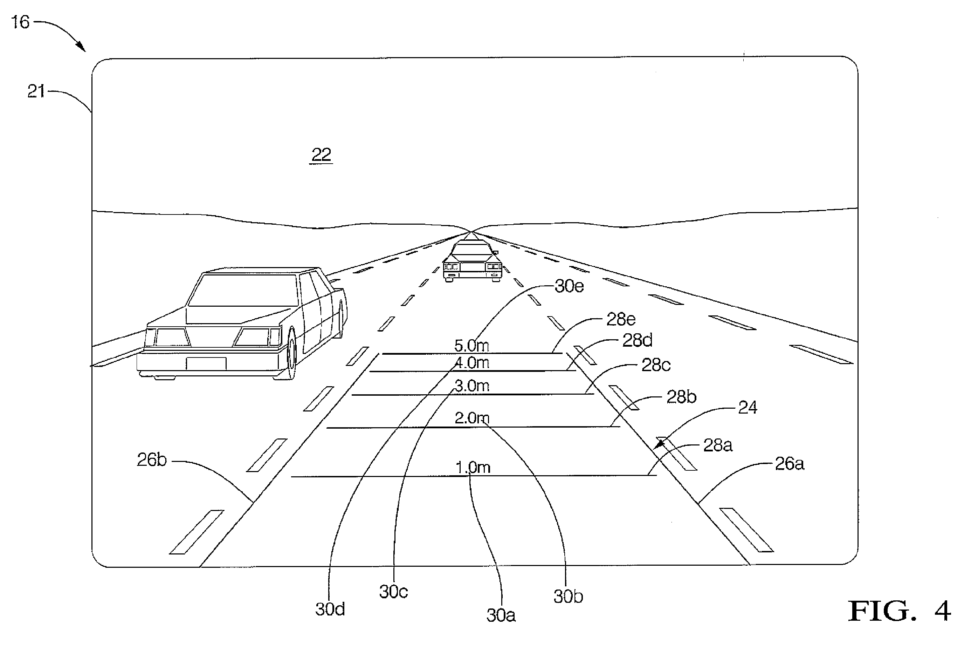

As shown in **FIG. 4****,** the rear view information overlay 24 provides geometric indicators with respect to the vehicle 18 that allow the driver to interpret the background video image 22 of the composite video image 21. In particular, the geometric indicators provided by the rear view information overlay 24 may include one or more path lines 26a, 26b as well as one or more distance lines 28a-28e. Of course, it should be understood that the rear view information overlay 24 need not include both the path lines 26a, 26b and the distance lines 28a-28e, but rather, the rear view information overlay may include either or both of the path lines 26a, 26b and the distance lines 28a-28e. It should also be understood that the rear view information overlay 24 may include additional elements that are superimposed upon the background video image 22. In the case where the in-vehicle display system 10 is forward-looking instead of rearward looking, the overlay 24 may provide information or markers of relevance to the area ahead of the vehicle 18, for applications such as lane departure.

The path lines 26a, 26b of the rear view information overlay 24 may include a first path line 26a and a second path line 26b that demarcate the portion of the video image 22 corresponding to the anticipated position of the vehicle 18 if the vehicle 18 proceeds in a straight line in the direction in which the image capture device 12 is facing. Thus, the first and second path lines 26a, 26b represent lines that are substantially parallel to one another and disposed at opposite sides of the vehicle 18. However, in the composite video image 21, the first and second path lines 26a, 26b appear to converge, due to the perspective view provided by the background video image 22.

The distance lines 28a-28e of the rear view information overlay 24 include a first distance line 28a, a second distance line 28b, a third distance line 28c, a fourth distance line 28d, and a fifth distance line 28e. Each of the first through fifth distance lines 28a-28e of the rear view information overlay 24 is positioned with respect to the background video image 22 at a location in the background video image 22 that corresponds to a particular distance along the roadway from the vehicle 18. For example, the first distance line 28a may correspond to a distance of one meter from the vehicle 18, while the second through fifth distance lines 28b-28e lines correspond to distances of two through five meters from the vehicle 18, respectively. However, due to the perspective view provided by the video image 22, the distance lines 28a-28e appear progressively closer together on the composite video image 21 as the distance lines 28a-28e correspond to distances that are progressively further from the vehicle 18. Also, in order to provide feedback to the driver regarding the distances represented by each of the distance lines 28a-28e, a plurality of text legends 30a-30e may be provided, wherein each text legend 30a-30e indicates the distance of a corresponding distance line 28a-28e from the vehicle 18.

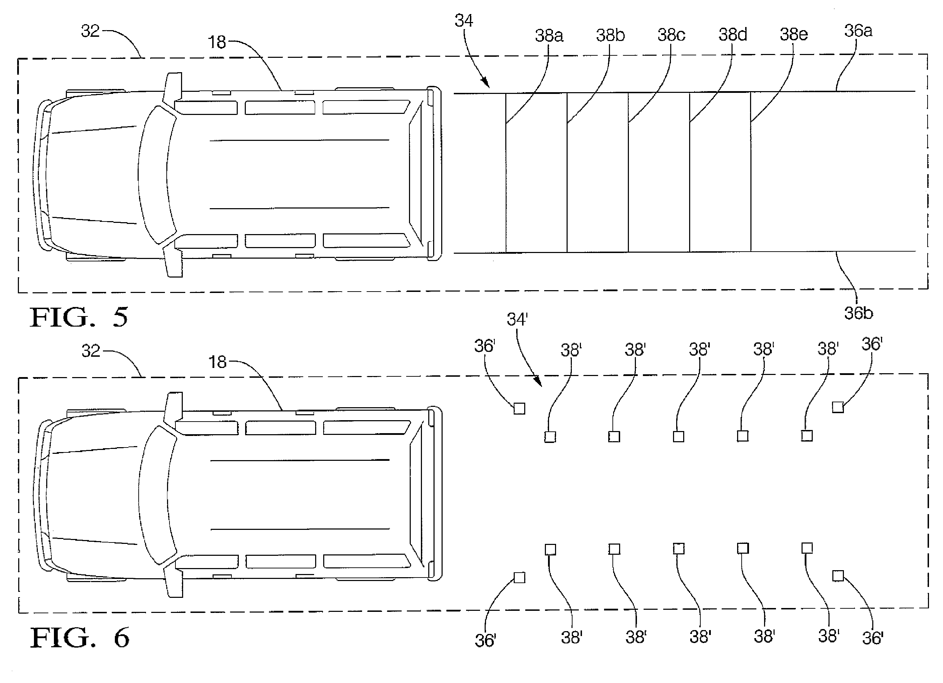

In order to properly position the constituent elements of the rear view information overlay 24, the in-vehicle display system 10 is calibrated, either during the vehicle assembly process or subsequent thereto, using a calibration station 32, as shown in **FIG. 5****.** For example, the calibration station 32 may be one of a plurality of workstations (not shown) along a vehicle assembly line (not shown). In the calibration station 32, space is provided for the vehicle 18, which is positioned at a predetermined location with respect to calibration indicia 34. This predetermined position is, for example, a position that transversely centers the vehicle 18 with respect to the calibration indicia 34 at a predetermined distance away from a particular portion of the calibration indicia 34.

The calibration indicia 34 provided at the calibration station 32 are representative of some or all of the elements that make up the rear view information overlay 24. Thus, the calibration indicia 34 include a plurality of path line indicators 36a, 36b that correspond to the path lines 26a, 26b of the rear view information overlay 24, as well as a plurality of distance line indicators 38a-38e that correspond to the distance lines 28a-28e of the rear view information overlay 24. Of course, the calibration indicia 34 need not include both the path line indicators 36a, 36b and the distance line indicators 38a-38e if only one these sets of indicia is to be utilized at the calibration station 32.

The constituent elements of the calibration indicia 34 are positioned in correspondence with the desired locations of the constituent elements of the rear view information overlay 24, and are adapted to be distinguished from their surroundings and identified by the in-vehicle display system 10 using known machine vision techniques. Accordingly, the calibration indicia 34 are typically placed on a floor surface (not shown) of the calibration station 32, and may be fabricated in various manners using a wide variety of materials, so long as the calibration indicia 34 are capable of being detected by known machine vision techniques. For example, the calibration indicia 34 may be painted lines, reflective tape, or structural elements, such as reflective rails, arranged in a geometric pattern corresponding to the rear view information overlay 24.

It should be understood, however, that the constituent elements of the calibration indicia 34 need not correspond exactly to the constituent elements of the rear view information overlay 24. For example, as shown in FIG. 6, the calibration station 32 may be provided with an alternative calibration indicia 34' that includes discrete path line indicators 36' and discrete distance line indicators 38' that correspond to discrete points on the elements of the rear view information overlay 24. For example, pairs of the path line indicators 36' and pairs of the distance line indicators 38' may represent endpoints from which straight lines may be constructed for calibrating the rear view information overlay 24, as will be described herein.

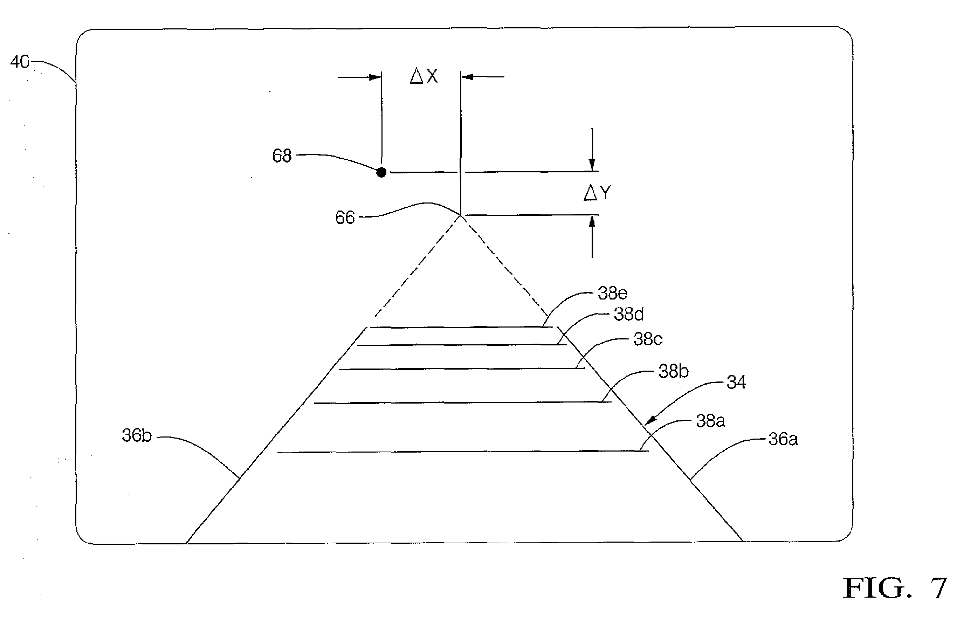

With the vehicle 18 positioned with respect to the calibration indicia 34 at the calibration station 32, the image processing device 14 may be instructed to enter a calibration mode for calibrating the rear view information overlay 24 by way of an input signal or switch (not shown). Initially, the image capture device 12 is used to capture a reference image 40, as shown in **FIG. 7**. Since the image capture device 12 is directed toward the calibration indicia 34 while the vehicle 18 is positioned with respect to the calibration indicia 34, the calibration indicia 34 are visible in the reference image 40.

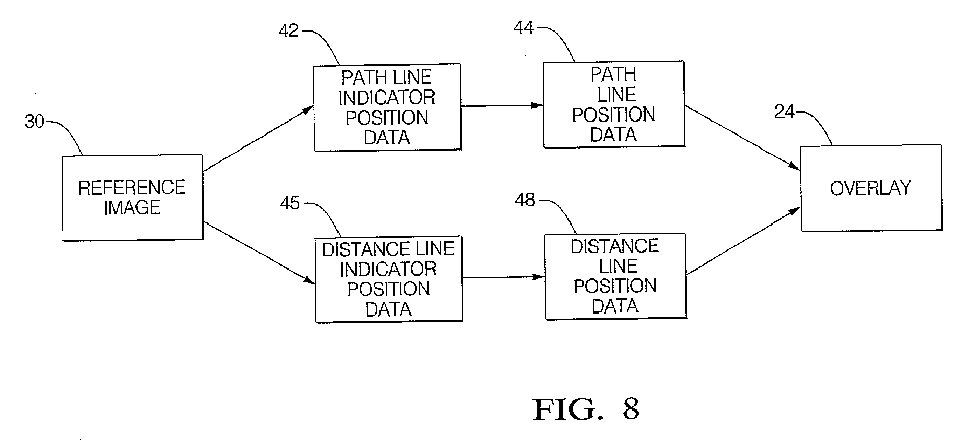

As shown in **FIG. 8**, the reference image 40 is processed by the image processor 14 to determine path line indicator position data 42, which represents those portions of the reference image 40 that correspond to the path line indicators 36a, 36b. The path line indicator position data 42 is then used to calculate path line position data 44, which represents the calibrated positions of the path lines 26a, 26b in the rear view information overlay 24. The reference image 40 is also processed to determine distance line indicator position data 46, which represents those portions of the reference image 40 that correspond to the distance line indicators 38a-38e. The distance line indicator position data 46 is then used to calculate distance line position data 48, which represents the calibrated positions of the distance lines 28a-28e in the rear view information overlay 24. Finally, the path line position data 44 and the distance line position data 48 are utilized by the image processor 14 to render the calibrated information overlay 24.

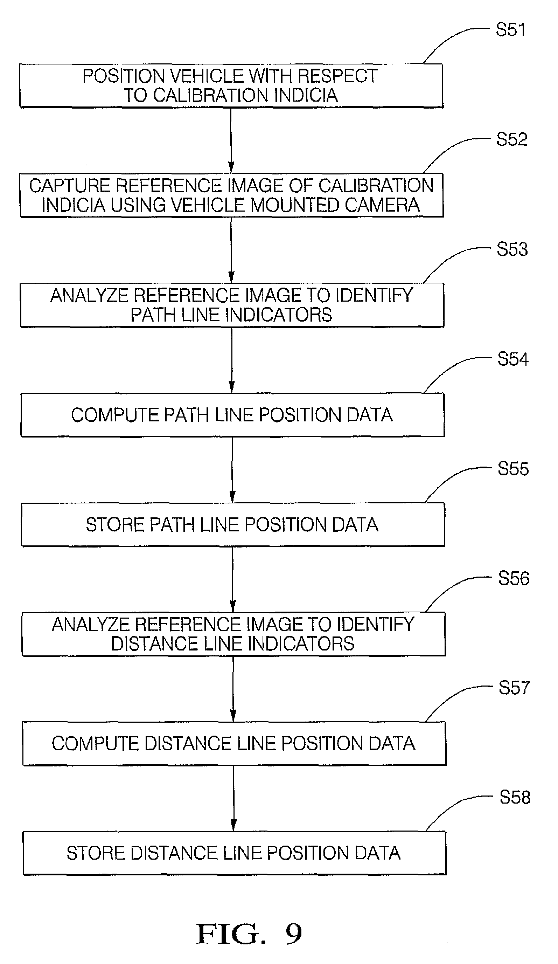

The detailed steps of the calibration method will be better understood with reference to **FIG. 9**. The calibration method begins by positioning the vehicle 18 with respect to the calibration indicia 34 in step S51. In particular, the vehicle 18 is placed at a predetermined position with respect to the calibration indicia 34 that corresponds to, for example, a particular distance from each of the distance line indicators 38a-38e as well as a particular transverse position and angular orientation with respect to the path line indicators 36a, 36b. After the vehicle 18 is positioned with respect to the calibration indicia 34, the calibration method proceeds by capturing the reference image 40 of the calibration indicia 34 in step S52 using the image capture device 12 of the in-vehicle display system 10.

Calibration of the path lines 26a, 26b proceeds by analyzing the reference image 40 captured in step S52 by the image processor 14 of the in-vehicle display system 10 to identify the path line indicators 36a, 36b in step S53. In particular, the path line indicators 36a, 36b are identified in step S53 by applying known machine vision algorithms, such as an edge detection algorithm, to the reference image 40. Once the path line indicators 36a, 36b have been identified, the image processor 14 outputs the path line indicator position data 42, which represents the portions of the reference image 40 that correspond to the path line indicators 36a, 36b. The path line indicator position data 42 may be in any known format suitable to identify a portion of an image, such as a raster data format, wherein pixels of the reference image 40 are identified that correspond to the path line indicators 36a, 36b, or a vector data format, wherein, for example, polygonal shapes are defined to identify those portions of the reference image 40 that correspond to the path line indicators 36a, 36b.

Once the portions of the reference image 40 that correspond to the path line indicators 36a, 36b have been determined, the path line position data 44 is computed in step S54. Generally stated, the path line position data computation step S54 interprets the path line indicator position data 42 output in step S53 and outputs the path line position data 44. The path line position data 44 allows the path lines 26a, 26b of the rear view information overlay 24 to be properly positioned with respect to the background video image 22 when the composite video image 21 is formed by the image processor 14. In particular, the path line position data 44 is computed in step S54 by mathematically interpreting the path line indicator position data 42 to define linear elements that correspond to the positions of the path lines 26a, 26b on the rear view information overlay 24. This is done, for example, by normalizing and interpolating the path line indicator position data 42. Alternatively, instead of defining linear elements that correspond to the positions of the path lines 26a, 26b, the path line position data 44 computed in step S54 could define graphical elements that will serve as the path lines 26a, 26b in the rear view information overlay 24. Next, in step S55, the path line position data 44 is stored in a storage medium, such as an internal memory provided in the image processor 14.

Calibration of the distance lines 28a-28e proceeds by analyzing the reference image 40 captured in step S52 using the processor 14 of the in-vehicle display system 10 to identify the distance line indicators 38a-38e in step S56. In particular, the distance line indicators 38a-38e are identified in step S56 by applying known machine vision algorithms, such as an edge detection algorithm, to the reference image 40. Once the distance line indicators 38a-38e have been identified, the image processor 14 outputs the distance line indicator position data 46, which represents the portions of the reference image 40 that correspond to the distance line indicators 38a-38e. The distance line indicator position data 46 may be in any known format suitable to identify a portion of an image, such as a raster data format, wherein pixels of the reference image 40 are identified that correspond to the distance line indicators 38a-38e, or a vector data format, wherein, for example, polygonal shapes are defined to identify those portions of the reference image 40 that correspond to the distance line indicators 3 8a-38e.

Once the portions of the reference image 40 that correspond to the distance line indicators 38a-38e have been determined, the distance line position data 48 is computed in step S57. Generally stated, the distance line position data computation step S57 interprets the output of step S56 and outputs the distance line position data 48. The distance line position data 48 allows the distance lines 38a-38e of the rear view information overlay 24 to be properly positioned with respect to the background video image 22 when the composite video image 21 is formed by the image processor 14. In particular, the distance line position data 48 is computed in step S57 by mathematically interpreting the distance line indicator position data 46 to define linear elements that correspond to the positions of the distance lines 28a-28e on the rear view information overlay 24. This is done, for example, by normalizing and interpolating the distance line indicator position data 46. Alternatively, instead of defining linear elements that correspond to the positions of the distance lines 28a-28e, the distance line position data 48 computed in step S57 could define graphical elements that will serve as the distance lines 28a-28e in the rear view information overlay 24. The distance line position data 48 is subsequently stored in a storage medium, such as, for example, one or both of an external storage device or an internal storage device provided in the image processor 14, in step S58.

After calibration, when the overlay 24 is required, it is rendered by the image processor 14, which uses the path line position data 44 and the distance line position data 48 to draw the overlay 24. Alternatively, it should be understood that the overlay 24 could be rendered once, and stored in the internal memory of the image processor 14, in which case the path line position data 44 and the distance line position data 48 need not be stored in the internal memory of the image processor 14.

Of course, if only the path lines indicators 36a, 36b are present at the calibration station 34, steps S56, S57 and S58 may be omitted. Similarly, steps S53, S54 and S55 may be omitted if only the distance line indicators 38a-38e are present at the calibration station 34. It should also be appreciated that that path line identification step S53 could be performed simultaneously with the distance line identification step S56, the path line computation step S54 could be performed simultaneously with the distance line computation step S57, and the path line data storage step S55 could be performed simultaneously with the distance line data storage step S58.

As described above, the path line position data computation step S54 and the distance line position data computation step S57 of the calibration method define linear elements that serve as the path lines 26a, 26b and the distance lines 28a-28e on the rear view information overlay 24. However, in an alternative aspect, a graphical version of the rear view information overlay 24 may be provided by applying image transformations to a graphical depiction of the rear view information overlay, wherein the necessary image transformations are determined using an alternative calibration method. Stated most generally, the alternative calibration method analyzes the reference image 40 to determine the position and orientation of the image capture device 12 with respect to the calibration indicia 34. Of course, fully describing the position and orientation of the image capture device would require description of the 3D mounting location of the image capture device 12 with respect to the vehicle 18 as well as the roll, pitch and pan angles of the image capture device 12. However, for a given type of camera and a particular vehicle type, the 3D mounting location can be considered to be constant. Furthermore, deviation of the roll angle may be minimized during installation, and therefore considered to be constant. Thus, by assuming the 3D mounting location and the roll angle of the image capture device 12, the position and orientation of the image capture device 12 with respect to the calibration indicia 34 may be fully described by determining the pitch angle of the image capture device 12 and the pan angle of the image capture device 12. Once the position and orientation of the image capture device 12 are determined, the rear view information overlay 24 may be rendered as if it were laid out on the roadway surface and photographed by a camera that is positioned in the same orientation as the image capture device 12.

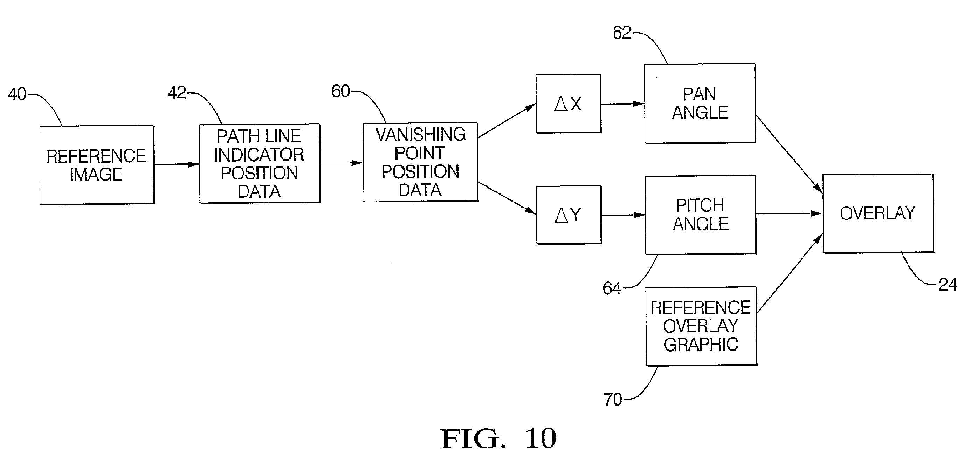

In the alternative calibration method, as shown in **FIG. 10**, the reference image 40 is processed to determine the path line indicator position data 42, as previously described. However, the image processor 14 then utilizes the path line indicator position data 42 to determine the location of an apparent vanishing point 66 of the path line indicators 36a, 36b, as seen in **FIG. 7**. The location of the vanishing point 66 is then compared to the location of a predetermined point 68 on the reference image 40, to determine the horizontal offset Δx and the vertical offset Δy of the vanishing point 66 with respect to the predetermined point 68, as also shown in **FIG. 7**. The horizontal offset Δx and the vertical offset Δy are utilized by the image processor 14 to calculate a pitch angle 62 and a pan angle 64.

The pitch angle 62 and the pan angle 64 are used to render the rear view information overlay 24 by rendering a perspective view of a reference overlay graphic 70. The reference overlay graphic 70 contains the path lines 26a, 26b and the distance lines 28a-28e without perspective, that is to say that the path lines 26a, 26b are parallel to one another, and the distance lines 28a-28e are equidistant from one another, or are otherwise situated in like manner to the orientation of the path line indicators 36a, 36b and the distance line indicators 38a-38e of the calibration indicia 34. The reference overlay graphic 70 may be any suitable data from which an image may be constructed, such as raster image data or vector image data. Furthermore, it should be understood that the reference overlay graphic 70 may simply be data describing the position of the path lines 26a, 26b and the distance lines 28a-28e with respect to the image capture device 12, from which the overlay 24 can be constructed mathematically, as will be described in detail herein.

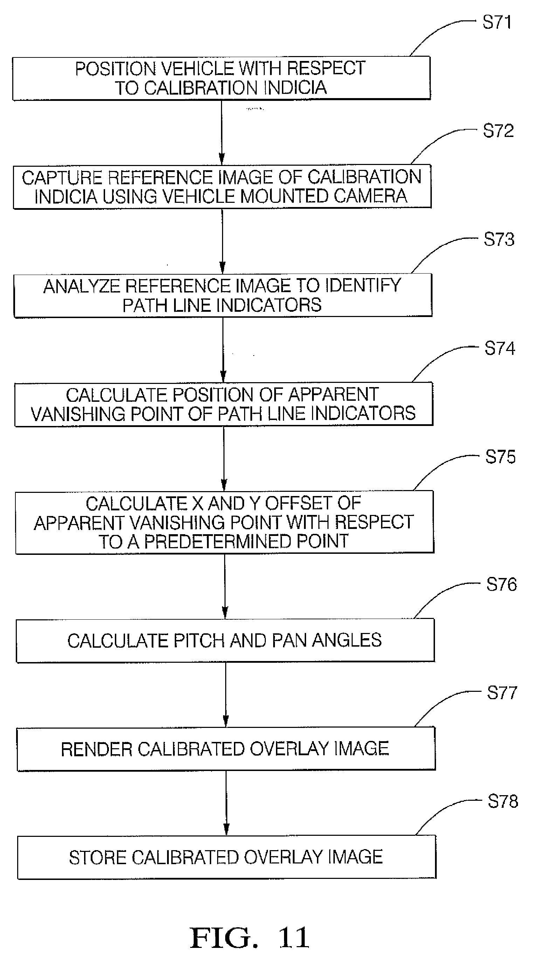

The detailed steps of the alternative calibration method will be better understood with reference to **FIG. 11**. The alternative calibration method begins by positioning the vehicle 18 with respect to the calibration indicia 34 in step S71, as previously described in connection with step S51. The reference image 40 is then captured in step S72, as previously described in connection with step S52. Calibration of the path lines 26a, 26b proceeds by analyzing the reference image 40 captured in step S72 using the processor 14 of the in-vehicle display system 10 to identify the path line indicators 36a, 36b in step S73, and thereby generate the path line indicator position data 42, as described in connection with step S53.

In order to calculate the vanishing point data 60 in step S74, the path line indicator position data 42 is utilized. The vanishing point data 60 corresponds to the location of the vanishing point 66, which can be defined as the point at which the lines in the reference image 40 defined by the path line indicators 36a, 36b, if extended, would meet one another. The location of the vanishing point 66 is determined by using the path line indicator position data 42 to construct lines that correspond to the orientation of each of the path line indicators 36a, 36b, as shown in the reference image 40, and extending those lines to their intersection, which defines the vanishing point 66. Thus, the location where the path line indicators 36a, 36b intersect one another is output as the vanishing point position data 60, for example, as X and Y coordinates referenced with respect to the reference image 40.

Next, in step S75, the horizontal offset Δx and the vertical offset Δy of the vanishing point 66 with respect to the location of the predetermined point 68 on the reference image 40 are calculated. The predetermined point 68 is that point at which the vanishing point 66 would appear if the image capture device 12 were properly aligned, and thus may be any selected point on the reference image 40, for example, the center of the reference image 40. Then, in step S76, the horizontal offset Δx is used to calculate the pan angle 62 of the image capture device 12, and the vertical offset Δy is used to calculate the pitch angle 64 of the image capture device 12 using well known geometric calculations. The pan angle 62 and the pitch angle 64 are then applied to the reference overlay graphic 70 by way of a three dimensional projection, wherein the pan angle 62 and the pitch angle 64 are applied to the orientation of a virtual camera or view point, from which the overlay 24 is rendered. The calibrated overlay 24 may be stored in the internal memory of the image processor 14. Alternatively, the pan angle 62 and the pitch angle 64 may be stored in the internal memory of the image processor 14, in which case the overlay 24 is rendered as needed.

In use, the rear view display system 10 of the vehicle 18 may be automatically calibrated either during or after assembly of the vehicle 18. To do so, the user first positions the vehicle 18 at the calibration station 32, at a predetermined position with respect to the reference indicia 34. The user then instructs the image processor 14 in the rear view display system 10 to enter a calibration mode. After the user starts the calibration mode, the image processor 14 sends a signal to the image capture device 12, instructing the image capture device 12 to produce the reference image 40, which is transmitted to the image processor 14. The image processor 14 analyzes the reference image 40 to produce a calibration data set, which may include any or all of the path line position data 44 and the distance line position data 48, the pan angle 62 and the pitch angle 64, or the calibrated overlay 24. Next, the calibration data set is stored in a data storage medium operatively associated with the image processor 14.

After calibration, when the overlay 24 is needed, the image processor generates the overlay image 24 based on the calibration data set, and superimposes the overlay image 24 over a video signal produced by the image capture device 12, such as the background video image 22, to produce the composite video image 21. The image processor 14 then displays the composite video image 22 on the monitor 16.

From the foregoing, it can be appreciated that the rear view display system 10 allows accurate positioning of overlays 24 without requiring excessively stringent tolerances. Furthermore, since the rear view display system 10 need not be configured for one particular vehicle or mounting location exclusively, the rear view display system 10 may be used for many vehicles and mounting locations without customization of the rear view display system 10 for each vehicle, thereby reducing production costs.

While the invention has been described in connection with what is presently considered to be the most practical and preferred embodiment, it is to be understood that the invention is not to be limited to the disclosed embodiments, but to the contrary, it is intended to cover various modifications or equivalent arrangements included within the spirit and scope of the appended claims. The scope is to be accorded the broadest interpretation so as to encompass all such modifications and equivalent structures as is permitted under the law.

## Claims

1. An apparatus for calibrating a video display overlay, comprising:
a calibration workstation (32) having calibration indicia (34, 34') disposed therein;
an image capture device (12) adapted to be vehicle-mounted, the image capture device (12) disposed within the calibration workstation (32) and directed toward the calibration indicia (34, 34'), wherein the image capture device (12) is operable to provide a reference image (40) depicting the calibration indicia (34, 34'); and
an image processor (14) electrically connected to the image capture device (12), wherein the image processor (14) is operable to receive the reference image (40), identify the portions of the reference image (40) that correspond to the calibration indicia (34, 34'), and thereby calculate a calibration data set (44, 48, 62, 64).

2. The apparatus of claim 1, wherein the image capture device (12) is operable to output a video signal (22), and the image processor (14) is operable to generate an overlay image (24) based on the calibration data set (44, 48, 62, 64), receive the video signal (22) from the image capture device (12), and superimpose the overlay image (24) on the video signal (22) to provide a composite video signal (21).

3. The apparatus of claim 2, wherein the calibration data set (44, 48, 62, 64) includes a pitch angle (64) of the image capture device (12) with respect to the calibration indicia (34, 34') and a pan angle (62) of the image capture device (12) with respect to the calibration indicia (34, 34').

4. The apparatus of claim 2, wherein the overlay image (24) includes a plurality of path lines (26a, 26b), and the calibration data set (44, 48, 62, 64) includes path line position data (44) for indicating the positions of the path lines (26a, 26b) in the composite video signal (21); or
wherein the overlay image includes a plurality of distance lines (30a - 30d), and the calibration data set (44, 48, 62, 64) includes distance line position data (48) for indicating the positions of the distance lines (30a - 30d) in the composite video signal (21); or
wherein the overlay image (24) includes a plurality of path lines (26a, 26b) and a plurality of distance lines (30a - 30d).

5. The apparatus of claim 1, wherein the calibration indicia (34, 34') includes a plurality of path line indicators (36a, 36b, 36') and a plurality of distance line indicators (38a-38e, 38').

6. A method for calibrating a video display overlay (24), comprising:
providing calibration indicia (34, 34');
providing an image capture device (12) adapted to be vehicle-mounted, and an image processor (14) operatively connected to the image capture device (12);
positioning the image capture device (12) with respect to the calibration indicia (34, 34');
capturing an image (40) of the calibration indicia (34, 34') using the vehicle-mounted image capture device (12);
analyzing the image (40) using the image processor (14) to identify the portions of the image (40) that correspond to the calibration indicia (34, 34') and outputting the result as calibration indicia position data (42, 45); and
calculating a calibration data set (44, 48, 62, 64) based on the calibration indicia position data (42, 45) using the image processor (14).

7. The method of claim 6, further comprising the steps of:
providing a monitor (16) operatively connected to the image processor (14);
generating an overlay image (24) based on the calibration data set (44, 48, 62, 64);
generating a video signal (22) using the image capture device (12);
superimposing the overlay image (24) on the video signal (22) to provide a composite video signal (21); and
displaying the composite video signal (21) on the monitor (16).

8. The method of claim 7, further comprising the steps of:
providing the calibration indicia (34, 34') having a plurality of path line indicators (36a, 36b, 36')and a plurality of distance line indicators (38a - 38e, 38').

9. The method of claim 7, further comprising the steps of:
providing the calibration data set (44, 48, 62, 64) having a pitch angle (64) of the image capture device (12) with respect to the calibration indicia (34, 34') and a pan angle (62) of the image capture device (12) with respect to the calibration indicia (34, 34').

10. The method of claim 7, further comprising the steps of:
providing the overlay (24) having a plurality of path lines (26a, 26b); and
providing the calibration data set (44, 48, 62, 64) having path line position data (44) for indicating the positions of the path lines (26a, 26b) in the composite video signal (21); or
further comprising the steps of:
providing the overlay (24) having a plurality of distance lines (30a - 30d); and
providing the calibration data set (44, 48, 62, 64) having distance line position data (48) for indicating the positions of the distance lines (30a - 30d) in the composite video signal (21); or
further comprising the steps of:
providing the overlay (21) having a plurality of path lines (26a, 26b) and a plurality of distance lines (30a - 30d).

11. The method of claim 7, further comprising the steps of:
providing the calibration indicia (34, 34') having a plurality of path line indicators (36a, 36b, 36')and a plurality of distance line indicators (38a - 38e, 38').

12. A method for calibrating a video display overlay (24), comprising:
providing a vehicle assembly line having a calibration workstation (32) having calibration indicia (34, 34') located therein;
providing a vehicle (18) having an image capture device (12) mounted thereto, an image processor (14) disposed within the vehicle (18) and operatively connected to the image capture device (12), and a monitor (16) operatively connected to the image processor (14);
positioning the vehicle (18) within the calibration workstation (32) at a predetermined location with respect to the calibration indicia (34, 34');
capturing an image of the calibration indicia (34, 34') using the vehicle-mounted image capture device (12);
analyzing the image using the image processor (14) to provide a calibration data set (44, 48, 62, 64);
storing the calibration data set (44, 48, 62, 64) in a data storage medium operatively associated with the image processor (14);
generating an overlay image (24) based on the calibration data set (44, 48, 62, 64);
generating a video signal (22) using the image capture device (12);
superimposing the overlay image (24) on the video signal (22) to provide a composite image (21); and
displaying the composite image (21) on the monitor (16).

13. The method of claim 12, wherein the calibration indicia (34, 34') includes a plurality of path line indicators (36a, 36b, 36') and a plurality of distance line indicators (38a-38e, 38').

14. The method of claim 12, further comprising the steps of:
providing the overlay (24) having a plurality of path lines (26a, 26b) and a plurality of distance lines (30a - 30d); and
providing the calibration data set (44, 48, 62, 64) having path line position data (44) for indicating the positions of the path lines (26a, 26b)in the composite video signal (21) and distance line position data (48) for indicating the positions of the distance lines (30a - 30d) in the composite video signal (21).

15. The method of claim 12, further comprising the steps of:
providing the calibration data set (44, 48, 62, 64) having a pitch angle (64) of the image capture device (12) with respect to the calibration indicia (34, 34') and a pan angle (62) of the image capture device (12) with respect to the calibration indicia (34, 34').
